# EUROPEAN PATENT SPECIFICATION

(11) **EP 2 424 382 B1**
(45) Date of publication and mention of the grant of the patent: **14.02.2018**
(21) Application number: 10721668.1
(22) Date of filing: 30.04.2010
(51) Int. Cl.: A23K 50/30

(54) **METHOD OF FEEDING A GROWING - FINISHING PIG**
VERFAHREN ZUR FÜTTERUNG VON MASTSCHWEINEN
Procédé d'alimentation de porc en fin de croissance

(30) Priority: 30.04.2009 EP 09005989
(43) Date of publication of application: 07.03.2012
(73) Proprietor: Tiense Suikerraffinaderij N.V., 1150 Brussel (BE)
(72) Inventor: JANSSENS, Guy, B-3001 Leuven (BE); THURMAN, Karel, B-8530 Harelbeke (BE)
(74) Representative: Koster, Nico
(86) International application number: PCT/EP2010/002653
(87) International publication number: WO 2010/124869

(56) References cited:
- EP-A2- 0 293 935
- GB-A- 406 403
- US-A- 4 734 402
- Ricardo R. Argana: "Swine feed substitute improve productivity"[Online] July 2004 (2004-07), XP002594211 MediaCore, PCARRD Retrieved from the Internet: URL:http://sntpost.stii.dost.gov.ph/frames /julytosept04/pg33.htm> [retrieved on 2010-07-26]
- L.K.Camp: "Effect of carbohydrate source on growth performance, carcass traits, and meat quality of growing-finishing pigs"[Online] 2003, XP002594214 Journal of animal science Retrieved from the Internet: URL:http://www.animal-science.org/cgi/repr int/81/10/2488> [retrieved on 2010-07-27]
- LEHESKA J M ET AL: "Effects of high-protein/low-carbohydrate swine diets during the final finishing phase on pork muscle quality." JOURNAL OF ANIMAL SCIENCE LNKD- PUBMED:11831511, vol. 80, no. 1, January 2002 (2002-01), pages 137-142, XP002594213 ISSN: 0021-8812

## Description

The invention relates to a method of feeding a growing-finishing pig, comprising the step of making available to the growing-finishing pig a feed. Such methods are widely known and practised. The feed as used in these methods is optimised towards achieving a high growth rate of the pig and towards achieving an as high as possible amount of meat of good quality on the pig.

There is, however, always an ongoing need to further optimise feed compositions that are targeted specifically to growing-finishing pigs.

It is the objective of the present invention to improve the method of feeding a growing-finishing pig, by making available a feed that results in an increased relative amount of lean meat in the growing-finishing pig.

The said objective is met by a method of increasing the relative amount of lean meat in a growing-finishing pig, comprising the step of making available to the growing-finishing pig a feed, whereby the feed contains a low-glycemic carbohydrate having a glycemic response of not more than 50% of that of glucose, wherein the low-glycemic carbohydrate is contained in a syrup, whereby the syrup is Palatinose syrup, containing:
i. between 1 wt.% and 25 wt.% fructose;
ii. between 1 wt.% and 25 wt.% glucose;
iii. between 15 wt.% and 60 wt.% isomaltulose; and
iv. between 10 wt.% and 60 wt.% trehalulose,
wherein the sum of (i.), (ii), (iii) and (iv) is at least 60 wt.%, and whereby the percentages are expressed as weight percentage of dry matter of the Palatinose syrup as a whole,
whereby the feed contains 5 -7 wt.% of the Palatinose syrup.

Ricardo R. Argana: "Swine feed substitute improve productivity" , July 2004, XP002594211, http://sntpost.stii.dost.gov.ph/frames/julytosept04/pg33.htm discloses that growing-finishing pigs fed with sugarcane juice-based ration showed good performance and efficiency in terms of average daily gain and total live-weight gain.

US-A-4 734 402 discloses that a feed for domestic animals containing saccharides mainly composed of fructooligosaccharide is particularly effective for growing young domestic animals. The feed can remedy the scours or loose passage frequently occuring young domestic animals in the weaning period of young animals and remarkably increase the weight of the young animals

EP-A-0 293 935 provides an additive for stock feeds containing decomposing products of chicory roots in which the total content of a polysaccharides and inulooligosaccharides of tri- and higher saccharides obtained by decomposing the chicory roots is 40% by weight or more of the total solid content and is 80% by weight or more of the total saccharides.

In GB-A-406 403 crude crystallized sugar is directly ground or mixed in the form of meal with ordinary dry fodder, e.g. bran, oil cake meal, meat meal, sugar beet slices, cocoa shells, rice fodder meal, ground hops, chopped straw bran, sesame cake meal &c. and with molasses or invert sugar syrup in the warm condition, the mixture being rendered plastic whilst warm and moulded by presses. Calcium phosphate and cattle salt may be added.

In L.K. Camp: "Effect of carbohydrate source on growth performance, carcass traits, and meat quality of growing-finishing pigs" (2003, XP002594214, http://www.animal-science.org/cgi/reprint/81/10/2488) the effect of substituting a more available dietary carbohydrate - sucrose - for portions of corn or fat in the diet on growing-finishing pigs was investigated.

In Leheska J.M. et al: "Effects of high-protein/low-carbohydrate swine diets during the final finishing phase on pork muscle quality" (Journal of Animal Science, Pubmed:11831511, vol.80, no.1, January 2002, pages 137-142, XP002594213, ISSN: 0021-8812) the aim was to lower the glycogen stores in pork muscles in order to improve pork muscle quality by feeding an ultra-high-protein/low-carbohydrate (HIPRO) diet.

It is an advantage of the present invention that the relative amount of lean meat of a pig can be increased.

It is yet a further advantage of the present invention that the overall quality of the meat and/or the overall carcass value of a growing-finishing pig can be improved and increased.

The present invention relates to growing-finishing pigs. These are understood to be pigs that are specifically raised with the aim of meat production. Typically, a piglet can be designated to be a growing-finishing pig after having reached a weight of about 20 kg. Also typically, the growing-finishing phase continues until the growing-finishing pig has reached a live weight lying between 80 and 180 kg, after which the pig is slaughtered. Thus, a growing-finishing pig may be described as being a pig that is raised specifically for its meat and has a live weight lying between 20 kg and 180 kg.

Due to the specific goals set in the feeding of growing-finishing pigs, the demands as set on the composition of a feed are different from the demands as set on the composition of feed that is provided to other pigs such as sows. A feed for a sow, for example, should be optimised such that the sow can produce milk - a totally different objective than that for the growing-finishing pigs.

In the method according to the present invention, a feed is made available to the growing-finishing pig. For the most part, this feed can be a feed of a known composition, comprising for example ingredients like soybean meal, corn, salt, vitamins and minerals. According to the invention, however, the feed should furthermore contain a low-glycemic carbohydrate having a glycemic response of not more than 50% of that of glucose. Such low-glycemic carbohydrates are as such known; examples of low-glycemic carbohydrates include fructose, slowly digestible starch, isomaltulose and trehalulose. Preferred examples are isomaltulose and/or trehalulose. As meant herein, the term low-glycemic carbohydrate encompasses a mixture of two or more low-glycemic carbohydrates.

The glycemic response of the low-glycemic carbohydrate should be not more than 50% of that of glucose. The glycemic response of the low-glycemic carbohydrate should preferably be assessed from blood glucose response curves in growing-finishing pigs; this may be achieved by means as such known, for example based on an amount of a low-glycemic carbohydrate in a serving of the feed compared to a serving of feed containing the equivalent amount of glucose. In a preferred embodiment, the low-glycemic carbohydrate is chosen such that its glycemic response is not more than 47, 44, 41, 38, or even not more than 35% of that of glucose.

In the method according to the invention, the feed may contain carbohydrates other than low-glycemic carbohydrates, as long as the amounts of the low-glycemic carbohydrate are according to the invention. This can result in a glycemic response of the feed that is higher than in the case when only low-glycemic carbohydrates would be used; nevertheless, such feeds are still according to the invention, whereby it is preferred that the glycemic response of the feed as a whole is at most 85% of the response of a feed having the same amount of carbohydrates but whereby these carbohydrates are essentially all high-glycemic carbohydrates, so that the comparative feed contains essentially no low-glycemic carbohydrates. More preferably, the glycemic response of the feed as a whole is according to the invention at most 80, 75, 70, 65, 60, 55, 50, or even at most 45% of the glycemic response of a feed having the same amount of, but essentially all high-glycemic, carbohydrates.

In a main embodiment of the invention, the low-glycemic carbohydrate is chosen such that it is essentially fully digestible. This has the advantage that more calories are available to the growing-finishing pigs as compared to carbohydrates that are to some extent non-digestible, such as for example carbohydrates that are fermented by intestinal bacteria.

According to the invention, the low-glycemic carbohydrate is contained in a molasses or syrup. As is known, such syrups can contain both low-glycemic carbohydrates as well as medium- or high-glycemic carbohydrates. Also, here, however, the amount of low-glycemic carbohydrates in the syrup should be such that an amount according to the invention is ultimately contained in the feed that is provided to the growing-finishing pigs. According to the invention the syrup is Palatinose syrup, which is a syrup containing various sugars such as Palatinose (chemical name α-D-Glucopyranosyl-(1→6)-D-fructofuranose, also known as isomaltulose) but also trehalulose (chemical name α-D-Glucopyranosyl-(1→1)-D-fructose), fructose, and sucrose. More specifically, Palatinose syrup is understood to be a syrup containing:
i. between 1 wt.% and 25 wt.% fructose, preferably between 7 and 17 wt%;
ii. between 1 wt.% and 25 wt.% glucose, preferably between 5 and 15 wt.%;
iii. between 15 wt.% and 60 wt.% isomaltulose, preferably between 20 and 45 wt.%; and
iv. between 10 wt.% and 60 wt.% trehalulose, preferably between 15 wt.% and 40 wt.%,
wherein the sum of (i.), (ii), (iii) and (iv) is at least 60 wt.%, preferably at least 70 wt.%, and whereby the percentages are expressed as weight percentage of dry matter of the Palatinose syrup as a whole. Palatinose syrup is also known as Palatinose molasses; these two terms are herein considered to be synonyms.

The low-glycemic carbohydrate may be in the form of separately identifiable particles such as granules or pellets, or it may be fully integrated with the rest of the feed composition. If the low-glycemic carbohydrate is in the form of separately identifiable particles, then they may be intermixed with the other components of the feed, or they may be made available to the growing-finishing pig separately; if this is done, however, care should be taken to ensure that the growing-finishing pig does not eat too little or too much of the low-glycemic carbohydrate.

According to the invention, the amount of the Palatinose syrup relative to the feed as a whole should vary between 5 and 7 wt.%.

The invention will be illustrated by means of the following Example and Comparative test, without being limited thereto.

### Example 1 and Comparative Experiment A

### Trial design

A group of 144 piglets (Genotype : Piétrain x Hybrid originating from one breeding stock) was divided into two groups of 72. Each group consisted for 50% barrows and 50% females. The groups were housed separately; also, the barrows were housed separately from the females. At the onset of the trial, the piglets were 9 weeks old and were divided over the pens (6 piglets per pen) in such a way that the average initial weight per pen was the same.

The piglets were given a three-phase feeding program, depending on their weight. The weight ranges per phase are: Phase I: 23 - 40 kg; Phase II: 40 - 80 kg; and Phase III: 80 - 110 kg. The feed compositions per Phase are provided in Table 1, both for Example 1 as well as for Comparative Experiment A.

**Table 1**

| Phase | I | I | II | II | III | III |
|---|---|---|---|---|---|---|
| Experiment/Example | A | 1 | A | 1 | A | 1 |
| Ingredient | | | | | | |
| Wheat | 29,997 | 29,897 | 35,923 | 35,923 | 37,009 | 37,009 |
| Barley | 20,4 | 20,4 | 15,1 | 15,1 | 16 | 16 |
| Wheat Middlings | 0,9 | 0,9 | 5,7 | 5,6 | 8,5 | 8,5 |
| Palatinose syrup | 0 | 5 | 0 | 6 | 0 | 7 |
| Cane Molasses | 5 | 0 | 6 | 0 | 7 | 0 |
| Rapeseed expeller | 3,5 | 3,5 | 4,5 | 4,5 | 5,5 | 5,5 |
| Soy Meal | 16,7 | 16,7 | 10,2 | 10,2 | 5,3 | 5,3 |
| DDGS Protifeed | 4 | 4 | 5 | 5 | 5 | 5 |
| Corn | 10 | 10 | 8 | 8 | 5 | 5 |
| Sunflower meal | 0 | 0 | 2 | 2 | 3 | 3 |
| Pork Fat | 3 | 3 | 3 | 3 | 2,97 | 2,97 |
| Chicory Pulp | 1,5 | 1,5 | 1,5 | 1,5 | 1,5 | 1,5 |
| Rapeseed Meal | 1,5 | 1,5 | 1 | 1 | 1,1 | 1,1 |
| Palm Kernel expellers | 1 | 1 | 0 | 0 | 0 | 0 |
| Limestone | 1,31 | 1,31 | 0,97 | 0,97 | 1,02 | 1,02 |
| NaCl | 0,4 | 0,4 | 0,4 | 0,4 | 0,39 | 0,39 |
| L-Lysine HCL | 0,333 | 0,333 | 0,374 | 0,374 | 0,387 | 0,387 |
| Px Porc 0.2%BP5 | 0 | 0 | 0,2 | 0,2 | 0,2 | 0,2 |
| L-threonine | 0,074 | 0,074 | 0,085 | 0,085 | 0,088 | 0,088 |
| DL-methionine | 0,066 | 0,066 | 0,048 | 0,048 | 0,036 | 0,036 |
| Minipig 0.3% | 0,3 | 0,3 | 0 | 0 | 0 | 0 |
| Vit.E GB dilution | 0,02 | 0,02 | 0 | 0 | 0 | 0 |

The animals were de-wormed at the start of the trial with Narpenol and at intermediate weighing with Ivomec, and were vaccinated against Aujeszki at start of the trial and after 5 weeks.

The animals had ad-lib access to the feed, and were slaughtered when they had reached a weight of 110 kg.

### Results

Some key parameters as established are summarized in Table 2.

**Table 2**

| | A | 1 |
|---|---|---|
| Average feed intake (gram/day) | 2124 | 2041 |
| Average feed conversion ratio | 2.70 | 2.61 |
| Average Carcass weight (kg) | 84.5 | 83.9 |
| Back fat thickness (mm) | 14.6 | 13.7 |
| % Lean meat | 60.1 | 60.9 |

### Legend to Table 2

- Feed Conversion: the average amount of feed (in kg) needed for a weight gain of 1 kg
- Average Carcass weight: measured 24 hrs. after slaughter and removal of all offals
- Lean meat percentage: predicted by measuring both the meat and back fat thickness by Sydel-CGM reflectometer on the *longissimus dorsi* muscle on the carcass.

As is clear from the results in Table 2, the feed conversion was significantly better in Example 1. Furthermore, the back fat thickness in Example 1 was reduced as compared to Comparative Experiment A, accompanied with a higher percentage of lean meat in Example 1.

## Claims

1. Method of increasing the relative amount of lean meat in a growing-finishing pig, comprising the step of making available to the growing-finishing pig a feed, whereby the feed contains a low-glycemic carbohydrate having a glycemic response of not more than 50% of that of glucose, wherein the low-glycemic carbohydrate is contained in a syrup, whereby the syrup is Palatinose syrup, containing:
i. between 1 wt.% and 25 wt.% fructose;
ii. between 1 wt.% and 25 wt.% glucose;
iii. between 15 wt.% and 60 wt.% isomaltulose; and
iv. between 10 wt.% and 60 wt.% trehalulose,
wherein the sum of (i.), (ii), (iii) and (iv) is at least 60 wt.%, and
whereby the percentages are expressed as weight percentage of dry matter of the Palatinose syrup as a whole,
whereby the feed contains 5 -7 wt.% of the Palatinose syrup.

## Patentansprüche

1. Verfahren zum Erhöhen der relativen Menge an magerem Fleisch bei einem Vormastschwein, umfassend den Schritt des Verfügbarmachens eines Futters für das Vormastschwein, wobei das Futter ein Kohlenhydrat mit einem niedrigen glykämischen Index mit einer glykämischen Reaktion von nicht mehr als 50% derjenigen von Glucose enthält, wobei das Kohlenhydrat mit niedrigem glykämischem Index in einem Sirup enthalten ist, wobei es sich bei dem Sirup um Palatinosesirup handelt, der Folgendes enthält:
i. zwischen 1 Gew.-% und 25 Gew.-% Fructose,
ii. zwischen 1 Gew.-% und 25 Gew.-% Glucose,
iii. zwischen 15 Gew.-% und 60 Gew.-% Isomaltulose; und
iv. zwischen 10 Gew.-% und 60 Gew.-% Trehalulose, wobei die Summe von (i), (ii), (iii) und (iv) mindestens 60 Gew.-% beträgt und wobei die Prozentsätze als Gewichtsprozentsatz der Trockenmasse des Palatinosesirups insgesamt ausgedrückt werden,
wobei das Futtermittel 5-7 Gew.-% Platinosesirup enthält.

## Revendications

1. Méthode d'augmentation de la quantité relative de viande maigre chez un porc en croissance-finition, comprenant l'étape consistant à mettre à la disposition du porc en croissance-finition un aliment pour animaux, où l'aliment pour animaux contient un glucide faiblement glycémique ayant une réponse glycémique d'au plus 50% de celle du glucose, où le glucide faiblement glycémique est contenu dans un sirop, où le sirop est un sirop de palatinose, contenant :
i. entre 1% en poids et 25% en poids de fructose ;
ii. entre 1% en poids et 25% en poids de glucose ;
iii. entre 15% en poids et 60% en poids d'isomaltulose ; et
iv. entre 10% en poids et 60% en poids de tréhalulose ;
où la somme de (i), (ii), (iii) et (iv) est d'au moins 60% en poids, et
où les pourcentages sont exprimés en pourcentage pondéral de matière sèche du sirop de palatinose dans son ensemble,
où l'aliment pour animaux contient 5-7% en poids du sirop de palatinose.
